# EUROPEAN PATENT APPLICATION

(11) **EP 4 286 353 A1**
(43) Date of publication of application: **06.12.2023**
(21) Application number: 23177096.7
(22) Date of filing: 02.06.2023
(51) Int. Cl.: C04B 41/00, C04B 41/52, C04B 41/89, F01D 5/28, C04B 111/00

(54) **ENVIRONMENTAL BARRIER COATING AND METHOD OF MAKING THE SAME**

(30) Priority: 03.06.2022 US 202217832094
(71) Applicant: RTX Corporation, Farmington, CT 06032 (US)
(72) Inventor: TANG, Xia, West Hartford, 06107 (US); BEALS, James T., West Hartford, 06107 (US); JACKSON III, Richard Wesley, Mystic, 06355 (US); LITTON, David A., West Hartford, 06107 (US); HAZEL, Brian T., Avon, 06001 (US)
(74) Representative: Dehns

(57) **Abstract**

A method of applying a top coat to an article according to an exemplary embodiment of this disclosure, among other possible things includes providing an article having a bond coat; applying a slurry directly onto the bond coat, the slurry including particles of a top coat material and at least one sintering aid in a carrier fluid; and sintering the top coat. A slurry composition for applying a top coat to an article is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

This disclosure relates to composite articles, such as those used in gas turbine engines, and methods of coating such articles. Components, such as gas turbine engine components, may be subjected to high temperatures, corrosive and oxidative conditions, and elevated stress levels. In order to improve the thermal and/or oxidative stability, the component may include a protective barrier coating.

### SUMMARY

A method of applying a top coat to an article according to an exemplary embodiment of this disclosure, among other possible things includes providing an article having a bond coat; applying a slurry (e.g. a slurry or slurry composition as herein described) directly onto the bond coat, the slurry including particles of a top coat material and at least one sintering aid (or precursor sintering aid) in a carrier fluid; and sintering the top coat.

In a further example of the foregoing, the particles of top coat material include particles of at least one of hafnia, hafnium silicate, yttrium silicate, yttria stabilized zirconia, gadolinia stabilized zirconia, calcium aluminosilicates, mullite, and barium strontium aluminosilicate, or combinations thereof.

In a further example of any of the foregoing, the sintering aid includes at least one of silica, alkaline earth aluminosilicates, borosilicates, and rare earth aluminosilicates, or combinations thereof.

In a further example of any of the foregoing, the slurry includes silica precursor, and wherein the silica precursor transforms to silica prior to or during the sintering step, the silica acting as the sintering aid.

In a further example of any of the foregoing, the slurry includes at least one of a dispersant and a binder, e.g. that is soluble in the carrier fluid.

In a further example of any of the foregoing, the slurry has a solids load of at least about 45% by volume.

In a further example of any of the foregoing, the slurry is a first slurry and the particles of top coat material are a first plurality of particles. The method also includes applying a second slurry having a second plurality of particles prior to the sintering step.

In a further example of any of the foregoing, the first and second pluralities of particles comprise different top coat materials.

In a further example of any of the foregoing, the first and second pluralities of particles comprise different top coat materials each selected from the group of hafnia, hafnium silicate, yttrium silicate, yttria stabilized zirconia, gadolinia stabilized zirconia, calcium aluminosilicates, mullite, and barium strontium aluminosilicate, or combinations thereof.

In a further example of any of the foregoing, the sintering occurs at about 2400-2750 degrees F (1315 C - 1525 degrees C).

In a further example of any of the foregoing, the slurry includes a metal compound, the metal compound melting or oxidizing in air at a temperature that is below the sintering temperature.

In a further example of any of the foregoing, the metal compound is silicon.

In a further example of any of the foregoing, the metal compound is HfSi, Hf3Si2, HfSi2, ZrSi, ZrSi2, Zr5Si4, or combinations thereof.

In a further example of any of the foregoing, the method also includes drying the slurry prior to the sintering step.

In a further example of any of the foregoing, the slurry is pressed onto the bond coat by the application of force during the applying step.

A slurry composition for applying a top coat to an article (e.g. via a method as herein described) according to an exemplary embodiment of this disclosure, among other possible things includes a carrier fluid, particles of a topcoat material, at least one sintering aid or precursor sintering aid, and, optionally, at least one dispersant/binder (e.g. that is soluble in the carrier fluid).

In a further example of the foregoing, the particles of top coat material include particles of at least one of hafnia, hafnium silicate, yttrium silicate, yttria stabilized zirconia, gadolinia stabilized zirconia, calcium aluminosilicates, mullite, and barium strontium aluminosilicate, or combinations thereof.

In a further example of any of the foregoing, the slurry includes silicon metal.

In a further example of any of the foregoing, the slurry includes HfSi, Hf3Si2, HfSi2, ZrSi, ZrSi2, Zr5Si4, or combinations thereof.

In a further example of any of the foregoing, the slurry includes a precursor sintering aid, and the precursor sintering aid is a silica precursor.

In a further example of any of the foregoing, the sintering aid includes at least one of silica, alkaline earth aluminosilicates, and rare earth aluminosilicates, or combinations thereof.

In a further example of any of the foregoing, the solids load of the slurry is at least about 45% by volume.

### BRIEF DESCRIPTION OF THE DRAWINGS

Certain exemplary embodiments will now be described in greater detail by way of example only and with reference to the accompanying drawings in which:
Figure 1 is a schematic view of an example gas turbine engine.
Figure 2 illustrates an article for the gas turbine engine of claim 1 with a coating.
Figure 3 schematically illustrates a method of applying the coating of Figure 2.

### DETAILED DESCRIPTION

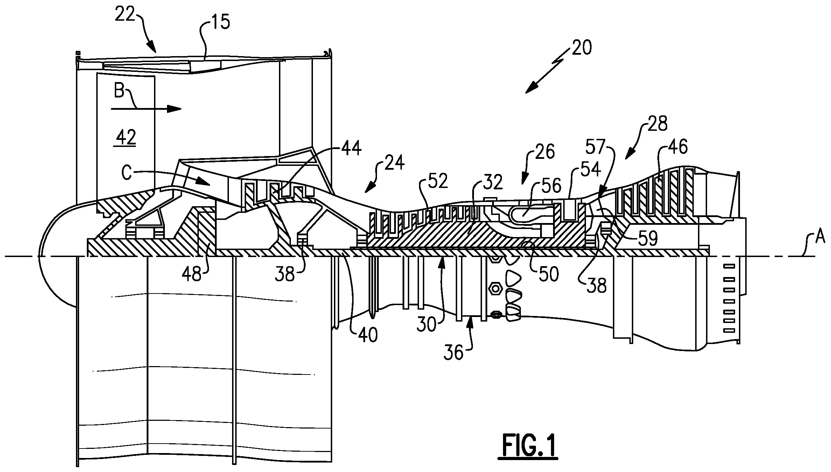

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

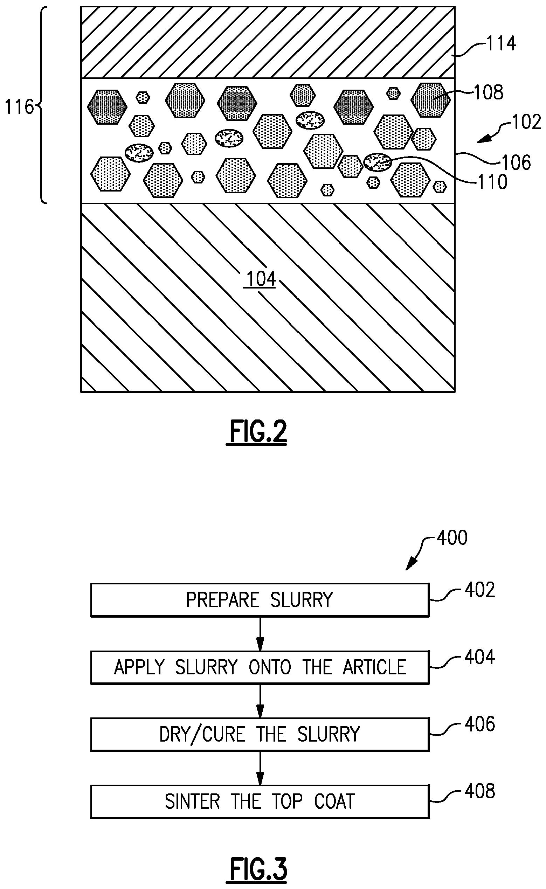

Figure 2 schematically illustrates a representative portion of an example article 100 for the gas turbine engine 20 that includes a composite material bond coat 102 that acts as a barrier layer. The article 100 can be, for example, an airfoil in the compressor section 24 or turbine section 28, a combustor liner panel in the combustor section 26, a blade outer air seal, or other component that would benefit from the examples herein. In this example, the bond coat 102 is used as an environmental barrier layer to protect an underlying substrate 104 from environmental conditions, as well as thermal conditions. As will be appreciated, the bond coat 102 can be used as a stand-alone barrier layer, as an outermost/top coat with additional underlying layers, or in combination with other coating under- or over-layers, such as, but not limited to, ceramic-based topcoats.

The bond coat 102 includes a matrix 106, a dispersion of "gettering" particles 108, and a dispersion of diffusive particles 110. The matrix 106 may be silicon dioxide (SiO₂), in one example. In one example, the gettering particles 108 are silicon oxycarbide particles (SiOC) or silicide particles such as molybdenum disilicide (MoSi₂) particles 108, though other examples are contemplated. The gettering particles 108 could be, for instance, molybdenum disilicide particles, tungsten disilicide particles, vanadium disilicide particles, niobium disilicide particles, silicon oxycarbide particles, silicon carbide (SiC) particles, silicon nitride (Si₃N₄) particles, silicon oxycarbonitride (SiOCN) particles, silicon aluminum oxynitride (SiAlON) particles, silicon boron oxycarbonitride (SiBOCN) particles, or combinations thereof. The diffusive particles 110 could be, for instance, barium magnesium alumino-silicate (BMAS) particles, barium strontium aluminum silicate particles, magnesium silicate particles, calcium aluminosilicate particles (CAS), alkaline earth aluminum silicate particles, yttrium aluminum silicate particles, ytterbium aluminum silicate particles, other rare earth metal aluminum silicate particles, or combinations thereof.

The bond coat 102 protects the underlying substrate 104 from oxygen and moisture. For example, the substrate 104 can be a ceramic-based substrate, such as a silicon-containing ceramic material. One example is silicon carbide. Another non-limiting example is silicon nitride. Ceramic matrix composite (CMC) substrates 104 such as silicon carbide fibers in a silicon carbide matrix are also contemplated. These CMC substrates can be formed by melt infiltration, chemical vapor infiltration (CVI), polymer infiltration and pyrolysis (PIP), particulate infiltration, or any other known method.

The gettering particles 108 and the diffusive particles 110 function as an oxygen and moisture diffusion barrier to limit the exposure of the underlying substrate 104 to oxygen and/or moisture from the surrounding environment. Without being bound by any particular theory, the diffusive particles 110, such as BMAS particles 110, enhance oxidation and moisture protection by diffusing to the outer surface of the barrier layer opposite of the substrate 104 and forming a sealing layer that seals the underlying substrate 104 from oxygen/moisture exposure. Additionally, cationic metal species of the diffusive particles 110 (for instance, for BMAS particles, barium, magnesium, and aluminum) can diffuse into the gettering particles 108 to enhance oxidation stability of the gettering material. Further, the diffusion behavior of the diffusive particles 110 may operate to seal any microcracks that could form in the barrier layer. Sealing the micro-cracks could prevent oxygen from infiltrating the barrier layer, which further enhances the oxidation resistance of the barrier layer. The gettering particles 108 can react with oxidant species, such as oxygen or water that could diffuse into the bond coat 102. In this way, the gettering particles 108 could reduce the likelihood of those oxidant species reaching and oxidizing the substrate 104.

The bond coat 102 can be applied by any known method, such as a slurry coating method similar to the method describe herein.

A ceramic-based top coat 114 is interfaced directly with the bond coat 102. As an example, the ceramic-based top coat 114 can include one or more layers of an oxide-based material. The oxide-based material can be, for instance, hafnium-based oxides or yttrium-based oxides (such as hafnia, hafnium silicate, yttrium silicates, yttria stabilized zirconia or gadolinia stabilized zirconia), calcium aluminosilicates, mullite, barium strontium aluminosilicate, or combinations thereof, but is not limited to such oxides.

The top coat 114 and bond coat 102 together form a barrier coating 116 for the substrate 104. The top coat 114 is the outermost layer of the barrier coating 116, and is exposed to the elements when the article 100 is in use.

Top coats 114 are often applied by thermal spray processes, which occur at very high temperatures. The very high temperatures cause top coat materials to melt, vaporize, and/or change phases. These physical processes can lead to chemical changes in the makeup of the top coat 114 as well as volume changes upon recrystallization of the top coat material as it is deposited by thermal spray. These chemical and volume changes can introduce mechanical stresses into the top coat 114, which in turn can debit the top coat 114 durability and protective properties. In a particular example where the top coat 114 includes hafnium silicate, the hafnium silicate can dissociate to hafnium oxide and amorphous silica during thermal spray deposition. Heat treatment is possible to recombine the top coat 114 but can result in shrinkage and residual free monoclinic hafnium oxide. This in turn can contribute to negative stress states in the top coat 114 which could lessen its recession resistance and generally result in more rapid delamination of the top coat 114 from the bond coat 102.

Figure 3 schematically illustrates a method 300 of applying the top coat 114 by a slurry coating process. In step 302, a slurry comprising top coat 114 constituents in a carrier fluid is prepared. The constituents include particles of top coat 114 material, such as hafnium silicate particles, other rare earth silicate particles, or particles of any of the example materials discussed above. The carrier fluid can be water or ethanol. The slurry may also contain a dispersant or binder that is soluble in the carrier fluid. For instance, the dispersant/binder can be an anionic polymer. Other dispersants and binders are well known in the art.

The slurry also includes one or more sintering aids or sintering aid precursors, such as silica precursors like silicon or silicon carbide, silica (silicon dioxide) itself, aluminosilicates such as alkaline earth aluminosilicates or rare earth aluminosilicates, or borosilicates. The silica precursors react with other constituents in the slurry to form silica prior to or during the sintering step discussed below. The sintering aids lower the temperature required to sinter and/or allow for more rapid sintering, and densify the top coat 114 in subsequent method steps 300 discussed below. In some examples, the sintering aids or silica precursors comprise up to about 20% by weight of the total solids in the slurry (excluding the carrier fluid). In further examples, the sintering aids or silica precursors comprise less than about 5% by weight of the total solids in the slurry.

The slurry may also include silicon (metal) or other metal compounds such as hafnium- or zirconium-silicon alloys including but not limited to HfSi, Hf₃Si₂, HfSi₂, ZrSi, ZrSi₂, and/or Zr₅Si₄. In some examples, the metal compounds comprise between about 10 and 20 % by solids weight of the slurry (excluding the carrier fluid). Some of the exemplary metal compounds have a melting temperature that is less than the sintering temperature of between about 2400 and about 2750 degrees F (1315 C - 1525 degrees C) (sintering is discussed in more detail below). For instance, the melting temperature of silicon metal is 1414 degrees C (2577 degrees F). Accordingly, in this example, the metal compound melts during the sintering and acts as a sintering aid in its molten state. Moreover, the metal compounds such as HfSi, Hf₃Si₂, HfSi₂, ZrSi, ZrSi₂, and/or Zr₅Si₄ oxidize in air at a temperature that is less than the sintering temperature. For instance, silicon metal oxidizes in air at about 700 degrees C (1292 degrees F) to silicon dioxide. The oxidation is accompanied by a volumetric expansion. For instance, the volumetric expansion (the ratio of the oxidized metal, e.g., silicon dioxide, to the unoxidized metal, e.g., silicon) for silicon is 2.15. Similar volume expansions occur as a result of other metal compounds, such as HfSi, Hf₃Si₂, HfSi₂, ZrSi, ZrSi₂, and/or Zr₅Si₄. This expansion acts to mitigate shrinkage of the top coat 114 that may occur during sintering, and associated crack formation, as well as improves densification and thus performance of the top coat 114.

In some examples where slurry includes silicon, silicon carbide, or other silica precursors, the slurry may also include rare earth oxides, which would react with the silica formed to provide rare earth silicates in the top coat 114. Rare earth silicates contribute to recession resistance of the top coat 114.

In some particular examples, the metal compound is in the form of a fine powder with average particle size between about 1 and about 10 microns. In one particle example, the powder may be milled to achieve the desired particle size.

In one example, the particles of top coat 114 material have a multimodal particle size distribution. In one example, the majority of the particles (e.g., at least 50%) have a diameter less than 50 microns. The multimodal distribution improves the solids loading of the slurry and improves packing of the particles onto the article 100 when the slurry is applied, resulting in a dense coating. In some particular examples, the porosity of the top coat 114 formed by the method 400 is less than about 10%.

In step 404, the slurry is applied to the article 100 directly onto the bond coat 102. In one example, the slurry is in the form of a thick paste (e.g., the slurry has a high viscosity and high solids load). For instance, the solids load may be greater than about 45% by volume. In further examples, the solids load is greater than about 60% by volume. The slurry can be applied manually or by a robot, such as a force-sensing robot, in some examples. During the applying, the slurry can be pressed onto the bond coat 102 by the application of force. This reduces the surface roughness of the top coat 114. In another example, the slurry has a lower viscosity suitable for spraying, painting, or dipping, and is applied by one of these methods.

In optional step 406, the slurry is dried and/or cured. The drying/curing generally allows some of the carrier liquid in the slurry to evaporate to improve handling of the article 100 for the sintering step discussed below. For instance, the drying/curing can be performed at relatively low temperatures e.g., between about room temperature and 200 degrees C (392 degrees F).

In some examples, step 404 and optional step 406 are repeated prior the sintering step 408 discussed below. The slurry in each repetition of step 404 can have the same or different compositions. For instance, step 404 could be performed with a slurry including a first plurality of particles of top coat material and the repeated with a second plurality of a different top coat material. Thus, multi-layer top coats 114 can be formed.

In step 408, the top coat 114 is sintered. The sintering occurs at about 2400-2750 degrees F (1315 C - 1525 degrees C).

In one example, the top coat 114 has a thickness of less than about 150 microns (0.006 inches) after the sintering step 408. In a further example the top coat 114 has a thickness of less than about 100 microns (0.004 inches) after the sintering step 408.

As compared to top coats 114 deposited by thermal spraying, the top coats 114 deposited by the slurry method described herein have improved adhesion to the bond coat 102, improved durability due to the absence of stress introduction as a result of phase transformation and compositional changes that occur during thermal spray processes, and smoother surface morphology. Additionally, the slurry coating method described herein provides flexibility in selecting the composition of the top coat 114.

As used herein, the term "about" has the typical meaning in the art, however in a particular example "about" can mean deviations of up to 10% of the values described herein.

Although the different examples are illustrated as having specific components, the examples of this disclosure are not limited to those particular combinations. It is possible to use some of the components or features from any of the embodiments in combination with features or components from any of the other embodiments.

Certain embodiments of the present disclosure are as follows:
1. A method of applying a top coat to an article comprising:
   providing an article having a bond coat;
   applying a slurry directly onto the bond coat, the slurry including particles of a top coat material and at least one sintering aid in a carrier fluid; and
   sintering the top coat.
2. The method of embodiment 1, wherein the particles of top coat material include particles of at least one of hafnia, hafnium silicate, yttrium silicate, yttria stabilized zirconia, gadolinia stabilized zirconia, calcium aluminosilicates, mullite, and barium strontium aluminosilicate, or combinations thereof.
3. The method of embodiment 1, wherein the sintering aid includes at least one of silica, alkaline earth aluminosilicates, borosilicates, and rare earth aluminosilicates, or combinations thereof.
4. The method of embodiment 1, wherein the slurry includes silica precursor, and wherein the silica precursor transforms to silica prior to or during the sintering step, the silica acting as the sintering aid.
5. The method of embodiment 1, wherein the slurry includes at least one of a dispersant and a binder that is soluble in the carrier fluid.
6. The method of embodiment 1, wherein the slurry has a solids load of at least about 45% by volume.
7. The method of embodiment 1, wherein the slurry is a first slurry and the particles of top coat material are a first plurality of particles, and further comprising applying a second slurry having a second plurality of particles prior to the sintering step.
8. The method of embodiment 7, wherein the first and second pluralities of particles comprise different top coat materials.
9. The method of embodiment 7, wherein the first and second pluralities of particles comprise different top coat materials each selected from the group of hafnia, hafnium silicate, yttrium silicate, yttria stabilized zirconia, gadolinia stabilized zirconia, calcium aluminosilicates, mullite, and barium strontium aluminosilicate, or combinations thereof.
10. The method of embodiment 1, wherein the sintering occurs at about 2400-2750 degrees F (1315 C - 1525 degrees C).
11. The method of embodiment 10, wherein the slurry includes a metal compound, the metal compound melting or oxidizing in air at a temperature that is below the sintering temperature.
12. The method of embodiment 11, wherein the metal compound is silicon.
13. The method of embodiment 11, wherein the metal compound is HfSi, Hf3Si2, HfSi2, ZrSi, ZrSi2, Zr5Si4, or combinations thereof.
14. The method of embodiment 1, further comprising drying the slurry prior to the sintering step.
15. The method of embodiment 1, wherein the slurry is be pressed onto the bond coat by the application of force during the applying step.
16. A slurry composition for applying a top coat to an article, comprising:
   a carrier fluid;
   particles of a topcoat material;
   at least one sintering aid or precursor sintering aid; and
   at least one dispersant/binder.
17. The slurry composition of embodiment 16, wherein the particles of top coat material include particles of at least one of hafnia, hafnium silicate, yttrium silicate, yttria stabilized zirconia, gadolinia stabilized zirconia, calcium aluminosilicates, mullite, and barium strontium aluminosilicate, or combinations thereof.
18. The slurry composition of embodiment 16, wherein the slurry includes silicon metal.
19. The slurry composition of embodiment 16, wherein the slurry includes HfSi, Hf3Si2, HfSi2, ZrSi, ZrSi2, Zr5Si4, or combinations thereof.
20. The slurry composition of embodiment 16, wherein the slurry includes a precursor sintering aid, and the precursor sintering aid is a silica precursor.
21. The slurry composition of embodiment 16, wherein the sintering aid includes at least one of silica, alkaline earth aluminosilicates, and rare earth aluminosilicates, or combinations thereof.
22. The slurry composition of embodiment 16, wherein the solids load of the slurry is at least about 45% by volume.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A method of applying a top coat to an article comprising:
providing an article having a bond coat;
applying a slurry directly onto the bond coat, the slurry including particles of a top coat material and at least one sintering aid, or precursor sintering aid, in a carrier fluid; and
sintering the top coat.

2. The method of claim 1, wherein the particles of top coat material include particles of at least one of hafnia, hafnium silicate, yttrium silicate, yttria stabilized zirconia, gadolinia stabilized zirconia, calcium aluminosilicates, mullite, and barium strontium aluminosilicate, or combinations thereof.

3. The method of claim 1 or claim 2, wherein the sintering aid includes at least one of silica, alkaline earth aluminosilicates, borosilicates, and rare earth aluminosilicates, or combinations thereof, and/or
wherein the slurry includes silica precursor, and wherein the silica precursor transforms to silica prior to or during the sintering step, the silica acting as the sintering aid.

4. The method of any preceding claim, wherein the slurry includes at least one of a dispersant and a binder that is soluble in the carrier fluid.

5. The method of any preceding claim, wherein the slurry has a solids load of at least about 45% by volume.

6. The method of any preceding claim, wherein the slurry is a first slurry and the particles of top coat material are a first plurality of particles, and further comprising applying a second slurry having a second plurality of particles prior to the sintering step.

7. The method of claim 6, wherein the first and second pluralities of particles comprise different top coat materials, e.g. each selected from the group of hafnia, hafnium silicate, yttrium silicate, yttria stabilized zirconia, gadolinia stabilized zirconia, calcium aluminosilicates, mullite, and barium strontium aluminosilicate, or combinations thereof.

8. The method of any preceding claim, wherein the sintering occurs at about 2400-2750 degrees F (1315 C - 1525 degrees C).

9. The method of any preceding claim, wherein the slurry includes a metal compound, the metal compound melting or oxidizing in air at a temperature that is below the sintering temperature, e.g. wherein the metal compound is silicon, and/or wherein the metal compound is HfSi, Hf3Si2, HfSi2, ZrSi, ZrSi2, Zr5Si4, or combinations thereof.

10. The method of any preceding claim, further comprising drying the slurry prior to the sintering step.

11. The method of any preceding claim, wherein the slurry is pressed onto the bond coat by the application of force during the applying step.

12. A slurry composition for applying a top coat to an article, comprising:
a carrier fluid;
particles of a topcoat material;
at least one sintering aid or precursor sintering aid; and
at least one dispersant/binder.

13. The slurry composition of claim 12, wherein the particles of top coat material include particles of at least one of hafnia, hafnium silicate, yttrium silicate, yttria stabilized zirconia, gadolinia stabilized zirconia, calcium aluminosilicates, mullite, and barium strontium aluminosilicate, or combinations thereof, and/or wherein the solids load of the slurry is at least about 45% by volume.

14. The slurry composition of claim 12 or claim 13, wherein the slurry includes silicon metal, and/or wherein the slurry includes HfSi, Hf3Si2, HfSi2, ZrSi, ZrSi2, Zr5Si4, or combinations thereof.

15. The slurry composition of any one of claims 12 to 14, wherein the slurry includes a precursor sintering aid, and the precursor sintering aid is a silica precursor, and/or wherein the sintering aid includes at least one of silica, alkaline earth aluminosilicates, and rare earth aluminosilicates, or combinations thereof.
